# EUROPEAN PATENT APPLICATION

(11) **EP 4 636 585 A1**
(43) Date of publication of application: **22.10.2025**
(21) Application number: 24759504.4
(22) Date of filing: 01.02.2024
(51) Int. Cl.: G06F 9/451

(54) **METHOD FOR DISPLAYING MOWING OPERATION AREA, AND RELATED APPARATUS**

(30) Priority: 21.02.2023 CN 202310171864
(71) Applicant: Shenzhen Mammotion Innovation Co., Limited, Shenzhen, Guangdong 518000 (CN)
(72) Inventor: WEI, Jidong, Shenzhen, Guangdong 518000 (CN); CHEN, Jianlin, Shenzhen, Guangdong 518000 (CN)
(74) Representative: Huang, Liwei
(86) International application number: PCT/CN2024/075129
(87) International publication number: WO 2024/174827

(57) **Abstract**

Embodiments of the present disclosure provide A displaying method for a mowing operation area and a related apparatus. The method includes: first, acquiring mowing operation data, in which the mowing operation data include operation area parameters when a mowing device performs a mowing operation; then, displaying the mowing operation data on a display apparatus; next, generating a target operation area based on the mowing operation data; and finally, maximizing a display of the target operation area according to a window size of the display apparatus. **In** this way, a target operation area is determined based on operation area parameters included in mowing operation data, and a display apparatus is enabled to maximally display the target operation area, thereby improving the intelligence of the display apparatus.

## Description

The present application claims the benefit of priority to Chinese Patent Application No. 2023101718649, filed with the China National Intellectual Property Administration on February 21, 2023 and entitled "METHOD FOR DISPLAYING MOWING OPERATION AREA AND RELATED APPARATUS", which are incorporated herein by reference in its entireties.

### TECHNICAL FIELD

The present disclosure relates to the field of display technologies, and specifically relates to a displaying method for a mowing operation area and a related apparatus.

### BACKGROUND

Currently, for a target graphic to be displayed on a screen, the prior art generally enlarges the shape in a simple manner, which fails to maximize display of images of various shapes.

### SUMMARY

Embodiments of the present disclosure provide A displaying method for a mowing operation area and a related apparatus, with the aim of enabling a display apparatus to maximize the display of the target operation area.

According to a first aspect, an embodiment of the present disclosure provides A displaying method for a mowing operation area, and the method includes:
acquiring a mowing operation data of a mowing device, in which the mowing operation data include operation area parameters when the mowing device performs a mowing operation;
displaying the mowing operation data on a display apparatus;
generating a target operation area based on the mowing operation data; and
maximizing a display of the target operation area according to a window size of the display apparatus.

According to a second aspect, an embodiment of the present disclosure provides a display system, and the display system includes:
an acquisition unit, configured to acquire a mowing operation data of a mowing device, in which the mowing operation data include operation area parameters when the mowing device performs a mowing operation;
a processing unit, configured to determine a target operation area based on the mowing operation data; and
a processing unit, configured to display the mowing operation data on a display apparatus and maximize a display of the target operation area according to a window size of the display apparatus.

According to a third aspect, an embodiment of the present disclosure provides a mowing system, including a display apparatus, a processor, a memory, a communications interface, and one or more programs stored in the memory and configured to be performed by the processor. The program includes instructions for performing steps of any one of the aspects from the first aspect to the second aspect of the embodiment of the present disclosure.

According to a fourth aspect, an embodiment of the present disclosure provides a computer storage medium storing a computer program for electronic data exchange, in which the computer program causes a computer to perform some or all of the steps of any one of the aspects from the first aspect to the second aspect as described in the present embodiment.

According to a fifth aspect, an embodiment of the present disclosure provides a computer program product, in which the computer program product includes a non-transitory computer-readable storage medium storing a computer program, and the computer program is operable to cause a computer to perform some or all of the steps of any one of the aspects from the first aspect to the second aspect as described in the embodiment of the present disclosure. The computer program product can be a software installation package.

It can be seen that, in embodiments of the present disclosure, firstly, mowing operation data are acquired, and the mowing operation data include operation area parameters when a mowing device performs a mowing operation; secondly, the mowing operation data are displayed on a display apparatus; thirdly, a target operation area is generated based on the mowing operation data; and finally, the target operation area is maximally displayed according to a window size of the display apparatus. In this way, the target operation area is determined based on operation area parameters included in the mowing operation data, and the display apparatus is enabled to maximally display the target operation area, thereby improving the intelligence of the display apparatus.

### BRIEF DESCRIPTION OF DRAWINGS

In order to more clearly illustrate technical solutions in embodiments of the present disclosure or in the prior art, drawings required for descriptions of the embodiments or the prior art are briefly introduced below. It should be understood that the drawings described below are merely some embodiments of the present disclosure, and that other drawings may also be derived by a person of ordinary skill in the art without creative efforts based on these drawings.
FIG. 1a is a schematic diagram of a mowing system according to an embodiment of the present disclosure.
FIG. 1b is another schematic diagram of a mowing system according to an embodiment of the present disclosure.
FIG. 2 is a schematic flowchart of a displaying method for a mowing operation area according to an embodiment of the present disclosure.
FIG. 3a is a schematic diagram of a process of determining a first operation area according to an embodiment of the present disclosure.
FIG. 3b is a schematic diagram of a process of determining a second operation area according to an embodiment of the present disclosure.
FIG. 3c is a schematic diagram of a process of determining a target operation area according to an embodiment of the present disclosure.
FIG. 3d is a schematic diagram of a process of adjusting a target operation area according to an embodiment of the present disclosure.
FIG. 4 is a schematic diagram of a display system according to an embodiment of the present disclosure.

### DETAILED DESCRIPTION OF THE EMBODIMENTS

In order to enable a person skilled in the art to better understand the solutions of the present disclosure, the technical solutions in embodiments of the present disclosure will be clearly and completely described below with reference to drawings. It is evident that the embodiments described are merely some embodiments of the present disclosure, rather than all embodiments. All other embodiments derived by a person of ordinary skill in the art based on the embodiments of the present disclosure without creative efforts shall fall within the scope of protection of the present disclosure.

The terms "first", "second" and the like in the specification, claims and above-mentioned drawings of the present disclosure are used to distinguish different objects, and are not intended to indicate a particular order. In addition, the terms "comprising", "having", and any variations thereof are intended to cover a non-exclusive inclusion. For example, a process, method, system, product or device including a series of steps or units is not limited to only those steps or units that are expressly listed, but optionally further includes steps or units that are not listed, or optionally further includes other steps or units inherent to the process, method, system, product or device.

Reference herein to the term "embodiment" means that a specific feature, structure or characteristic described with respect to an embodiment may be included in at least one embodiment of the present disclosure. The appearance of the phrase at various places in the specification does not necessarily refer to the same embodiment, nor is it necessarily mutually exclusive with other embodiments as a separate or alternative embodiment. It is explicitly and implicitly understood by the person skilled in the art that the embodiments described herein can be combined with other embodiments.

Relevant terms involved in the present disclosure are introduced below.

Currently, existing map-based task execution apps typically adopt following processing approaches for displaying elements on a map:
1. single element: by proportionally enlarging the element such that its bounding rectangle matches with two edges of a window;
2. multiple elements: after calculating a bounding rectangle of an element group, the element group is proportionally enlarged such that its bounding rectangle matches with two edges of a window; and
3. without requiring maximized display of elements, an appropriate display range can be obtained by manually dragging and zooming after locating a position of a device.

However, direct enlargement methods in the first and second approaches cannot accommodate elements of various shapes. If some elements/element groups have shapes that are not similar to that of a window, effective maximization cannot be achieved. The third approach, which relies on manual adjustment, serves as a fallback solution and lacks adaptive capability.

In summary, the prior art generally performs a simple magnification of a shape to be displayed, failing to achieve a maximized display of images having various shapes.

To address the above problems, an embodiment of the present disclosure provides a displaying method for a mowing operation area. The method can be applied to a scene in which multiple mowing areas are to be displayed in a maximized manner. Mowing operation data input by a user can be acquired, and the mowing operation data include operation area parameters when a mowing device performs a current mowing operation; at least one reference operation area is determined based on the operation area parameters, and the at least one reference operation area is used to indicate an operation area in which the mowing device performs the current mowing operation, and any two of the reference operation areas are non-overlapping; when the at least one reference operation area includes multiple areas, a plurality of the reference operation areas are merged to obtain a first operation area; a second operation area enclosing the first operation area and having a convex polygon shape is determined; a plurality of third operation areas, wherein each third operation area covers the second operation area and has a rectangular shape, are determined, and each side of a single third operation area overlaps with at least one point of the second operation area to determine the third operation area with a smallest area from the plurality of the third operation areas as a target operation area; and the target operation area is maximally displayed according to a window size of a display apparatus. This enables the display apparatus to maximally display the target operation area. The solution can be applied to a plurality of scenarios, including but not limited to above-mentioned application scenarios.

A system architecture involved in an embodiment of the present disclosure is described below.

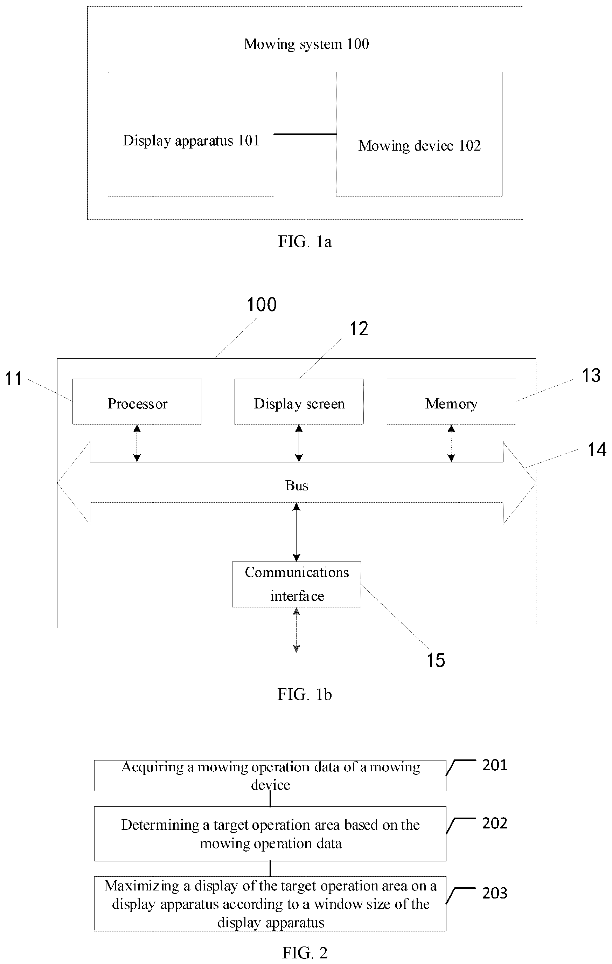

The present disclosure provides a mowing system 100. As shown in FIG. 1a, the mowing system 100 at least comprises a display apparatus 101 and a mowing device 102, and the mowing device 102 is configured to perform a mowing operation set by a user, and the display apparatus 101 is configured to monitor a mowing operation process of the mowing device 102.

Alternatively, the display apparatus 101 can be a mobile terminal or a fixed terminal; the mobile terminal can be a mobile phone, a tablet, and so on; and the fixed terminal can be a desktop computer or a specific monitoring device. The present disclosure is not limited thereto. The display apparatus 101 can further be configured to input mowing operation data; and the mowing operation data can also be input via other terminal devices, and the present disclosure is not limited thereto.

As shown in FIG. 1b, the mowing system 100 can further include at least a processor 11, a display screen 12, and a memory 13, and can further include a communications interface 15 and a bus 14. The processor 11, the display screen 12, the memory 13, and the communications interface 15 can communicate with each other via the bus 14. The display screen 12 is configured to display a preset user guide interface in an initial setup mode. The communications interface 15 can transmit information. The processor 11 can invoke a logic instruction in the memory 13 to perform a method of an embodiment of the present disclosure.

In some embodiments, the display apparatus 101 can be a mobile electronic device, an electronic device, or other devices, and the present disclosure is not limited thereto.

In addition, the logic instruction in the above-mentioned memory 13 can be implemented in a form of software functional unit and, when sold or used as an independent product, can be stored in a computer-readable storage medium.

The memory 13, as a computer-readable storage medium, can be configured to store software programs and computer executable programs, such as a program instruction or module corresponding to a method of an embodiment of the present disclosure. The processor 11 executes a functional application and data processing by running a software program, an instruction or a module stored in the memory 13, thereby implementing the method of the above embodiment.

The memory 13 can include a program storage area and a data storage area, in which the program storage area can store an operating system and an application program required for at least one function; and the data storage area can store data and the like generated according to a use of the display apparatus 101. In addition, the memory 13 can include a high-speed random access memory and can further include a non-volatile memory. For example, the memory can be various media capable of storing a program code, such as a USB flash drive, a mobile hard disk, a read-only memory (ROM), a random access memory (RAM), a magnetic disk, or an optical disk, and can also be transient storage media.

A specific method is described in detail below.

Referring to FIG. 2, the present disclosure further provides a displaying method for a mowing operation area, which can be applied to a display apparatus in a mowing system; the mowing system includes a mowing device and the display apparatus; and the method includes:
Step 201, acquiring a mowing operation data of a mowing device.

Specifically, the mowing operation data are input by a user via the display apparatus or other terminal devices and then the mowing operation data are acquired by the display apparatus for processing, and the mowing operation data include operation area parameters when the mowing device performs a current mowing operation.

Step 202, determining a target operation area based on the mowing operation data.

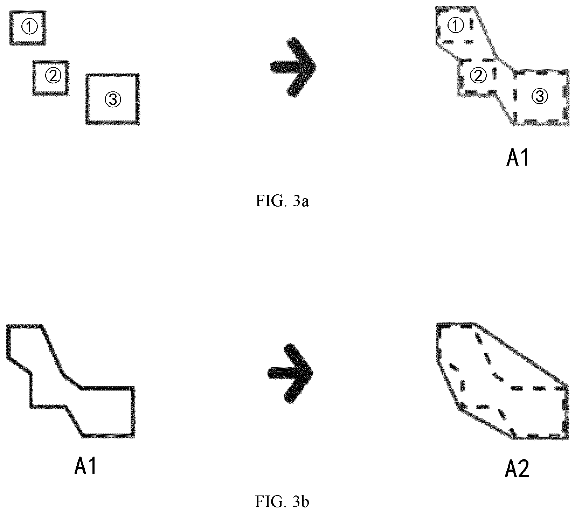

In some illustrative embodiment, as shown in FIGS. 3a to 3c, the generating the target operation area based on the mowing operation data includes: determining at least one reference operation area based on the operation area parameters, in which the at least one reference operation area is used to indicate an operation area in which a mowing device performs a current mowing operation, and any two of the reference operation areas are non-overlapping; when the at least one reference operation area includes multiple areas, the target operation area is determined based on the at least one reference operation area; and when the at least one reference operation area includes only a single area, the target operation area is determined based on the single reference operation area.

In a specific embodiment, one or more reference operation areas may exist within a same map area in practical application scenarios. When only one reference operation area exists, it is typically adequate to directly enlarge the reference operation area. When a plurality of reference operation areas exist, preprocessing is required to merge a plurality of the reference operation areas into a unified whole, that is, a target operation area, which is then subjected to enlargement processing as a whole.

It can be seen that in this embodiment, different enlargement processes are performed based on a number of reference operation areas, thereby enhancing the intelligence of the enlargement processing performed by the display device.

In some illustrative embodiments, as shown in FIGS. 3a to 3c, the determining, when there are a plurality of the reference operation areas, the target operation area based on the plurality of the reference operation areas comprises: merging a plurality of the reference operation areas to obtain a first operation area A1; and determining a minimum bounding rectangle of the first operation area as the target operation area.

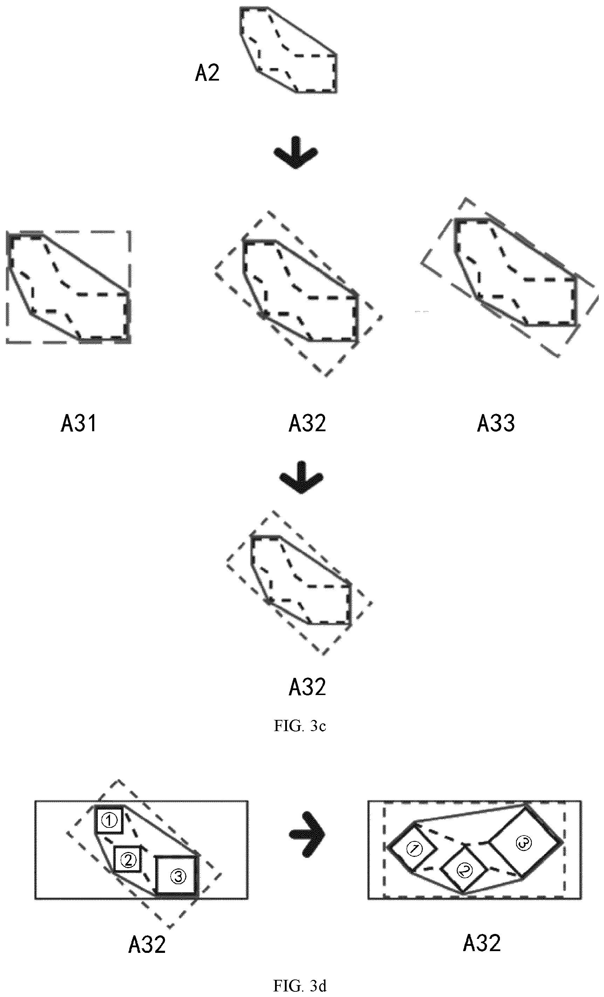

Specifically, the determining the minimum bounding rectangle of the first operation area as the target operation area includes: determining a second operation area A2 enclosing the first operation area A1 and having a convex polygon shape; determine a plurality of third operation area wherein each third operation area covers the second operation area A2 and has a rectangular shape, in which each side of a single third operation area overlaps with at least one point of the second operation area A2; and determining the third operation area with a smallest area among a plurality of the third operation areas (three are taken as examples, A31, A32, and A33 in FIG. 3c) as the target operation area (A32 in FIG. 3c).

Specifically, referring to FIG. 3a, the merging the plurality of the reference operation areas to obtain the first operation area A1 comprises: connecting at least two corners between two adjacent reference operation areas among the plurality of the reference operation areas to obtain a plurality of first line segments; and smoothing the plurality of the first line segments to obtain the first operation area A1.

In a specific implementation, each of a plurality of the reference operation areas is an independent entity (such as areas ①, ②, and ③ in FIG. 3a), and cannot be displayed to maximum simultaneously. Therefore, it is necessary to perform a merging process on the plurality of reference operation areas, so that the plurality of reference operation area are treated as a single whole for subsequent processing. Specifically, two corners between two adjacent reference operation areas among the plurality of the reference operation areas are connected, thereby converting a plurality of the reference operation areas into a concave polygon (that is, the first operation area A1).

It can be seen that in this embodiment, a plurality of independent reference operation areas can be merged into a single concave polygon, so that subsequent processing can be performed on the single concave polygon instead of a plurality of the independent areas, thereby improving efficiency of subsequent processing of a display apparatus.

Specifically, referring to FIG. 3b, determining the second operation area A2 enclosing the first operation area A1 and having a convex polygon shape comprises: when two second interior angles are adjacent to a first interior angle of the first operation area A1, and both of the two second interior angles are less than 180°, connecting first distal vertices of two edges forming the first interior angle, so as to determine a first edge of the second operation area A2, wherein the first interior angle is greater than 180° among a plurality of the interior angles of the first operation area A1, and the first distal vertices refers to vertices located away from the first interior angle; when two second interior angles are adjacent to the first interior angle of the first operation area, and at least one of the two second interior angles is greater than 180°, connecting a first distal vertex of a first line segment forming the first interior angle, to a second distal vertex of a second line segment forming the second interior angle which is greater than 180°, so as to determine a second edge of the second operation area A2, wherein the first line segment is a line segment away from the second interior angle which is greater than 180°, and the second line segment is a line segment away from the first interior angle, and the second distal vertex refers to a vertex away from the second interior angle; and determining the second operation area A2 based on a plurality of the first edge and the second edge corresponding to a plurality of the interior angles.

In a specific implementation, two edges of an angle greater than 180° are connected; meanwhile, if at least one of two adjacent second interior angles of the first interior angle is greater than 180°, the first distal vertex of the first line segment of the first interior angle is connected to a second distal vertex of a second line segment of the second interior angle to fill a concavity of the concave polygon, thereby converting the concave polygon into a convex polygon (that is, a second operation area A2).

It can be seen that in this embodiment, a concave polygon can be converted into a convex polygon, thereby improving efficiency of subsequent processing of a display apparatus.

Specifically, referring to FIG. 3c, the determining a plurality of the third operation areas (three are taken as examples, A31, A32, and A33 in FIG. 3c) wherein each operation area covers the second operation area A2 and has a rectangular shape, comprises: determining a plurality of vertices of the second operation area A2; and determining a plurality of the third operation areas wherein each third operation area covers the second operation area and has a rectangular shape according to the plurality of the vertices.

In a specific implementation, only a plurality of vertices of each edge of the convex polygon are retained by removing all intermediate points on the edges, thereby enabling an obtainment of a plurality of third operation areas with different areas based on the vertices.

It can be seen that in this embodiment, a bounding rectangle can be constructed based on a convex polygon.

Step 203, maximizing a display of the target operation area on a display apparatus according to a window size of the display apparatus.

In some illustrative embodiments, referring to FIG. 3d, the maximizing the display of the target operation area according to the window size of the display apparatus comprises: adjusting an edge of the target operation area to be parallel to an edge of the window; and proportionally enlarging the adjusted target operation area until edges of the target operation area are matched with the edges of the window.

In a specific implementation, the target operation area is first adjusted to be parallel to the window and undergoes a preliminary enlargement, and then proportional enlargement is performed until at least two edges of the target operation area match with the edges of the window, indicating that a maximum display has been achieved.

It can be seen that in this embodiment, a maximum display of a plurality of reference operation areas is achieved.

In some illustrative embodiments, the determining the target operation area based on the single reference operation area includes determining a minimum bounding rectangle of the single reference operation area as the target operation area.

In a specific implementation, if only a single reference operation area exists, a bounding rectangle is directly constructed based on the single reference operation area; and if a plurality of bounding rectangles are obtained, a smallest bounding rectangle among a plurality of the bounding rectangles is determined as the target operation area.

In some illustrative embodiments, the determining the target operation area based on the single reference operation area includes: determining, when only a single reference operation area exists, whether the single reference operation area is a rectangle; directly displaying, if the single reference operation area is a rectangle, the single reference operation area according to a window size of a display apparatus; determining, if the single reference operation area is not a rectangle, whether the single reference operation area is a convex polygon; determining, if the single reference operation area is not a convex polygon, a fourth operation area enclosing the single reference operation area and having a convex polygon shape, and then determining a fifth operation area enclosing the fourth operation area and having a rectangular shape; determining, if the single reference operation area is a convex polygon, a plurality of fifth operation areas enclosing the single reference operation area and having rectangular shapes; determining the fifth operation area with a smallest area among a plurality of the fifth operation areas as the target operation area; and displaying the target operation area according to the window size of the display apparatus.

In a specific implementation, if only a single reference operation area exists, and the shape of the single reference operation area is rectangular, since a window is also rectangular, the shape of the single reference operation area is similar to the window and can be directly subjected to enlargement display processing. If a single reference operation area is not a rectangle but a convex polygon, a plurality of different bounding rectangles of the convex polygon are directly determined, and then a bounding rectangle with a smallest area is selected as a target operation area, which is subsequently subjected to enlargement display. If a single reference operation area is neither a rectangle nor a convex polygon, a convex polygon (that is, a fourth operation area) enclosing the single reference operation area is determined, and then a plurality of fifth operation areas of the fourth operation area are determined, and, finally, a target operation area from a plurality of the fifth operation areas is determined, and subsequently subjected to maximized display.

It can be seen that in this embodiment, adaptive enlargement of a single reference operation area can be achieved, thereby enhancing the intelligence of a display apparatus.

In one possible embodiment, before the merging the plurality of the reference operation areas to obtain the first operation area, the method further includes: determining whether all of the plurality of the reference operation areas are displayed within a window; and scaling the mowing operation area to display all the plurality of the reference operation areas within the window when not all of the plurality of reference operation areas are displayed within the window.

In a specific implementation, under certain circumstances, a plurality of reference operation areas may not be fully displayed within the window. If such a situation is detected, a display apparatus will first scale a mowing operation area so that all the reference operation areas are display within the window, and then perform a maximized enlargement process.

It can be seen that in this embodiment, full display of a plurality of reference areas is achieved.

The above mainly describes the scheme of the embodiment of the present disclosure from a perspective of the execution process on the method side. It can be understood that in order to realize the above functions, a mobile electronic device includes a hardware structure and/or software module corresponding to each function. A person skilled in the art will readily appreciate that the units and algorithm steps of each example described in the embodiments provided herein can be implemented in hardware, or in a combination of hardware and computer software by the present disclosure. Whether a certain function is performed in hardware or through computer software driving the hardware depends on the specific application and design constraints of the technical solution. Professional technicians can adopt different approaches to implement the described functions for each specific application, but such implementations should not be regarded as exceeding the scope of the present disclosure.

An embodiment of the present disclosure can divide electronic devices into functional units according to the above method example. For example, each functional can correspond to a separate functional unit, and two or more functions can be integrated into one single processing unit. The above-mentioned integrated unit can be implemented in the form of hardware or as software functional units. It should be noted that the division of units in the embodiment of the present disclosure is illustrative and merely represents a logical function division. In actual implementations, other ways of division can be adopted.

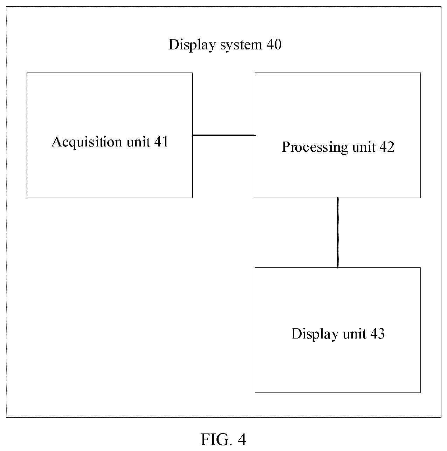

Referring to FIG. 4, the present disclosure further provides a display system 40, including:
an acquisition unit 41, configured to acquire a mowing operation data of a mowing device, in which the mowing operation data include operation area parameters when the mowing device performs a mowing operation;
a processing unit 42, configured to generate a target operation area based on the mowing operation data; and
a display unit 43, configured to determine a target operation area based on the mowing operation data, and to maximize a display of the target operation area according to a window size of a display apparatus.

It can be seen that in this embodiment, firstly, mowing operation data are acquired, in which the mowing operation data include operation area parameters when a mowing device performs a mowing operation; secondly, the mowing operation data are displayed on a display apparatus; thirdly, a target operation area is generated based on the mowing operation data; and finally the target operation area is maximized for display according to a window size of the display apparatus. In this way, a target operation area is determined based on operation area parameters included in mowing operation data, and a display apparatus is enabled to maximally display the target operation area, thereby improving the intelligence of the display apparatus.

In one possible embodiment, regarding the determining the target operation area based on the mowing operation data, the processing unit 42 is specifically configured to: determine at least one reference operation area based on operation area parameters, in which the at least one reference operation area is used to indicate an operation area in which the mowing device performs a current mowing operation; determine, when there are a plurality of the reference operation areas, the target operation area based on the plurality of the reference operation areas; and determine, when there is a single reference operation area, the target operation area based on the single reference operation area.

In one possible embodiment, regarding the determining, when there are a plurality of the reference operation areas, the target operation area based on the plurality of the reference operation areas, the processing unit 42 is specifically configured to merge a plurality of the reference operation areas to obtain a first operation area, and determine a minimum bounding rectangle of the first operation area as the target operation area.

In one possible embodiment, regarding the determining the minimum bounding rectangle of the first operation area as the target operation area, the processing unit 42 is specifically configured to: determine a second operation area enclosing the first operation area and having a convex polygon shape, determine a plurality of third operation areas wherein each third operation area covers the second operation area and has a rectangular shape, in which each side of the third operation areas overlaps with the second operation area at least one point, and determine the third operation area with a smallest area from the plurality of the third operation areas as the target operation area.

In one possible embodiment, regarding the merging the plurality of the reference operation areas to obtain a first operation area, the processing unit 42 is specifically configured to connect at least two corners between two adjacent reference operation areas among the plurality of the reference operation areas to obtain a plurality of first line segments, and smooth the plurality of the first line segments to obtain the first operation area.

In one possible embodiment, regarding the determining the second operation area enclosing the first operation area and having a convex polygon shape, the processing unit 42 is specifically configured to: connect first distal vertices of two edges forming a first interior angle to determine a first edge of the second operation area when two adjacent second interior angles of a first interior angle of the first operation area are both less than 180°, in which the first interior angle is greater than 180° among a plurality of the interior angles of the first operation area, and the first distal vertex refers to a vertex away from the first interior angle; connect the first distal vertex of a first line segment of the first interior angle to a second distal vertex of a second line segment of the second interior angle to determine a second edge of the second operation area when at least one of two adjacent second interior angles of a first interior angle is greater than 180°, in which the first line segment is a line away from the second interior angle, and the second line segment is a line away from the first interior angle, and the second distal vertex refers to a vertex opposite to the second interior angle; and determine the second operation area based on a plurality of the first edges and the second edges corresponding to the interior angles.

In one possible embodiment, regarding the determining a plurality of the third operation areas wherein each third operation area covers the second operation area and has a rectangular shape, the processing unit 42 is specifically configured to determine a plurality of vertices of the second operation area, and determine a plurality of the third operation areas based on the plurality of vertices.

In one possible embodiment, before the merging the plurality of the reference operation areas to obtain the first operation area, the system further includes the display unit 43 further configured to: determine whether all of the plurality of the reference operation areas are displayed within a window; and scale the mowing operation area to display all the plurality of the reference operation areas within the window when not all of the plurality of reference operation areas are displayed within the window.

In one possible embodiment, regarding the determining the target operation area based on the single reference operation area, the processing unit 42 is specifically configured to determine a minimum bounding rectangle of the single reference operation area as the target operation area.

In one possible embodiment, regarding the maximizing a display of the target operation area according to the window size of the display apparatus, the display unit 43 is specifically configured to: adjusting an edge of the target operation area to be parallel to an edge of the window; and proportionally enlarge the adjusted target operation area until edges of the target operation area are matched with edges of the window.

The above embodiments can be implemented in whole or in part by software, hardware, firmware, or any combination thereof. When implemented in software, the above embodiments can be implemented in whole or in part in the form of a computer program product. The computer program product includes one or more computer instructions or computer programs. When the computer instructions or computer programs are loaded or performed on a computer, a process or function described in an embodiment of the present disclosure is generated in whole or in part. The computer can be a general-purpose computer, a special-purpose computer, a computer network, or another programmable apparatus. The computer instructions can be stored in a computer-readable storage medium or transmitted from one computer-readable storage medium to another computer-readable storage medium. For example, the computer instructions can be transmitted, either wired or wirelessly, from one website site, computer, server, or data center to another website site, computer, server, or data center. The computer-readable storage medium can be any available medium accessible by a computer or a data storage device such as a server or data center that contains one or more collections of available media. The available medium can be a magnetic medium (e.g., a floppy disk, a hard disk, a magnetic tape), an optical medium (for example, a DVD), or a semiconductor medium. The semiconductor medium can be a solid-state drive.

An embodiment of the present disclosure further provides a computer storage medium, in which the computer storage medium stores a computer program for electronic data exchange, and the computer program causes a computer to perform part or all of the steps of any of the embodiment of the method described above, and the computer includes an electronic device.

An embodiment of the present disclosure further provides a computer program product, which includes a non-transitory computer-readable storage medium storing a computer program, and the computer program is operable to cause a computer to execute part or all of the steps of any of the embodiment of the method described above. The computer program product can be a software installation package, and the computer includes an electronic device.

It should be understood that in various embodiments of the present disclosure, the order of the steps described above does not necessarily indicate the sequence of execution. The execution order of the steps should be determined based on their functions and inherent logic, and should not be construed as imposing any limitation on the implementation of the embodiments of the present disclosure.

It should be understood that the methods, apparatuses, and systems disclosed in several embodiments of the present disclosure can be implemented in other ways. For example, the above-described embodiments of the apparatus are merely illustrative. The division of the modules, for instance, is only one logical functional partition, and other division methods can be adopted in actual implementations. For example, multiple units or components can be combined or integrated into another system, or certain features can be omitted or not performed. Another point is that the mutual coupling or direct coupling or communication connection shown or discussed can be through some interfaces, and indirect coupling or communication connection between apparatuses or units can be electrical, mechanical, or implemented in other forms.

The units described as separate components can or cannot be physically separate, and the components shown as units can or cannot be physical units, that is, they may be located in one place or distributed across multiple network units. Some or all of the units can be selected as needed to achieve the objectives of this embodiment.

In addition, in the various embodiments of the present disclosure, the functional units can be integrated into one processing unit, or each unit can be physically separate, or two or more units can be integrated into one unit. The above-mentioned integrated units can be implemented in hardware or in a combination of hardware and software functional units.

The above-mentioned integrated units implemented in the form of software functional units can be stored in a computer-readable storage medium. The above-mentioned software functional units are stored in a storage medium and include several instructions configured to enable a computer device (which can be a personal computer, server, or network device, and so on) to execute part of the steps of the method described in various embodiments of the present disclosure. The storage medium includes a USB flash drive, a portable hard disk, a magnetic disk, an optical disc, a volatile memory, or a non-volatile memory. The non-volatile memory can be a read-only memory (ROM), a programmable ROM (PROM), an erasable PROM (EPROM), an electrically EPROM (EEPROM), or a flash memory. The volatile memory can be a random access memory (RAM), which is used as an external high-speed cache. By way of example but not limitation, many forms of random access memory (RAM) are available, such as static RAM (SRAM), dynamic RAM (DRAM), synchronous DRAM (SDRAM), double data rate SDRAM (DDR SDRAM), enhanced SDRAM (ESDRAM), synchlink DRAM (SLDRAM), and direct rambus RAM (DR RAM). Various other media capable of storing program codes can also be used.

The present disclosure has been disclosed by way of embodiments, and is not to be construed as being limited thereto. Any person skilled in the art can readily make variations or substitutions without departing from the spirit and scope of the present disclosure, and can make various changes and modifications, including combinations of the above-mentioned different functions and implementation steps, as well as implementations in software, hardware, or a combination thereof. All such modifications fall within the scope of protection of the present disclosure.

## Claims

1. A displaying method for a mowing operation area, comprising:
acquiring a mowing operation data of a mowing device, wherein the mowing operation data includes operation area parameters when the mowing device performs a mowing operation;
determining a target operation area based on the mowing operation data; and
maximizing a display of the target operation area on a display apparatus according to a window size of the display apparatus.

2. The displaying method according to claim 1, wherein the determining the target operation area based on the mowing operation data comprises:
determining at least one reference operation area based on the operation area parameters, wherein the reference operation area is used to indicate an operation area in which the mowing device performs a current mowing operation;
determining, when there are a plurality of the reference operation areas, the target operation area based on the plurality of the reference operation areas; and
determining, when there is a single reference operation area, the target operation area based on the single reference operation area.

3. The displaying method according to claim 2, wherein the determining, when there are the plurality of the reference operation areas, the target operation area based on a plurality of the reference operation areas, comprises:
merging the plurality of the reference operation areas to obtain a first operation area; and
determining a minimum bounding rectangle of the first operation area as the target operation area.

4. The displaying method according to claim 3, wherein the determining the minimum bounding rectangle of the first operation area as the target operation area comprises:
determining a second operation area enclosing the first operation area and having a convex polygon shape;
determining a plurality of third operation areas, wherein each third operation area covers the second operation area and has a rectangular shape, wherein each side of the third operation areas overlaps with at least one point of the second operation area; and
determining, from the plurality of third operation areas, the third operation area with a smallest area as the target operation area.

5. The displaying method according to claim 3, wherein the merging the plurality of the reference operation areas to obtain the first operation area comprises:
connecting at least two corners between two adjacent reference operation areas among the plurality of the reference operation areas to obtain a plurality of first line segments; and
smoothing the plurality of the first line segments to obtain the first operation area.

6. The displaying method according to claim 4, wherein the determining the second operation area enclosing the first operation area and having the convex polygon shape comprises:
when two second interior angles are adjacent to a first interior angle of the first operation area, and both of the two second interior angles are less than 180°, connecting first distal vertices of two edges forming the first interior angle, so as to determine a first edge of the second operation area, wherein the first interior angle is greater than 180° among a plurality of the interior angles of the first operation area, and the first distal vertices refers to vertices located away from the first interior angle;
when two second interior angles are adjacent to the first interior angle of the first operation area, and at least one of the two second interior angles is greater than 180°, connecting a first distal vertex of a first line segment forming the first interior angle, to a second distal vertex of a second line segment forming the second interior angle which is greater than 180°, so as to determine a second edge of the second operation area, wherein the first line segment is a line segment away from the second interior angle which is greater than 180°, and the second line segment is a line segment away from the first interior angle, and the second distal vertex refers to a vertex away from the second interior angle; and
determining the second operation area based on a plurality of the first edge and the second edge corresponding to a plurality of the interior angles.

7. The displaying method according to claim 4, wherein the determining the plurality of the third operation areas wherein each third operation area covers the second operation area and has a rectangular shape, comprises:
determining a plurality of vertices of the second operation area; and
determining a plurality of the third operation areas wherein each third operation area covers the second operation area and has a rectangular shape, according to the plurality of the vertices.

8. The displaying method according to claim 3, wherein before the merging the plurality of the reference operation areas to obtain the first operation area, the method further comprises:
determining whether all of the plurality of the reference operation areas are displayed within the window; and
scaling the mowing operation area to display all the plurality of the reference operation areas within the window, when not all of the plurality of reference operation areas are displayed within the window.

9. The displaying method according to claim 2, wherein the determining the target operation area based on the single reference operation area comprises:
determining a minimum bounding rectangle of the single reference operation area as the target operation area.

10. The displaying method according to claim 1, wherein the maximizing the display of the target operation area on the display apparatus according to the window size of the display apparatus comprises:
adjusting an edge of the target operation area to be parallel to an edge of the window; and
proportionally enlarging the adjusted target operation area until edges of the target operation area are matched with edges of the window.

11. A display system, comprising:
an acquisition unit, configured to acquire a mowing operation data of a mowing device, wherein the mowing operation data include operation area parameters when the mowing device performs a mowing operation;
a processing unit, configured to determine a target operation area based on the mowing operation data; and
a display unit, configured to display the mowing operation data on a display apparatus and maximize a display of the target operation area according to a window size of the display apparatus.

12. A mowing system, comprising, a display apparatus, a processor, a memory, a communications interface, and one or more programs stored in the memory and configured to be performed by the processor, wherein the program comprises instructions for performing the steps of the display method according to any one of claims 1 to 10.

13. A non-transitory computer-readable storage medium, wherein the computer-readable storage medium stores a computer program for electronic data exchange, and the computer program causes a computer to perform instructions of steps of the display method according to any one of claims 1 to 10.
